# EUROPEAN PATENT APPLICATION

(11) **EP 1 239 472 A1**
(43) Date of publication of application: **11.09.2002**
(21) Application number: 01500143.1
(22) Date of filing: 08.06.2001
(51) Int. Cl.: G11B 20/00

(54) **Anti-copy protection system for audio compact discs**

(30) Priority: 23.02.2001 ES 200100436
(71) Applicant: MPO Iberica, S.A., 28925 Alcorcon (Madrid) (ES)
(72) Inventor: Auzanne, Hervé, 28925 Alcorcon (Madrid) (ES); Torrejon Rosas, Alberto, 28925 Alcorcon (Madrid) (ES); Garcia Abadillo, Carlos, 28925 Alcorcon (Madrid) (ES)
(74) Representative: Gonzalez Vacas, Eleuterio

(57) **Abstract**

The system is especially conceived for avoiding the copying of audio compact discs in personal computers but allowing their perfect playing back in any of the audio readers in the market and allowing as well their being copied in CDR recorders (or similar.) For said purpose, the contents of the Lead-in or TOC are modified, specifically editing from audio mode to ROM mode so that the audio reader plays back correctly the protected CD and makes a computer believe that the data the protected songs contain have a distribution inside the disc sectors different than the actual one, so that when trying to read any one protected song, it cannot play it and when trying to copy the entire CD an error message displays.

## Description

### OBJECT OF THE INVENTION

The present invention refers to a system for protection against copying of audio compact discs, specifically conceived for avoiding their fraudulent copying with personal computers, when up until now said compact discs can be played and copied.

### BACKGROUND OF THE INVENTION

An audio compact disc, from now on "audio CD" is divided basically into three sections: Lead-in or TOC, Program Area and Lead-out. The Lead-in, which is the first piece of information that a CD reader reads upon insertion of the CD, indicates the information of the CD contents (duration, number of tracks, location of the songs in the disc, ISRC codes, etc.) After the Lead-in comes the Program Area, in which are the contents of the songs (the music.) Finally, there is a Lead-out that does not contain anything and just indicates the end of the CD. The CD has pits from the Lead-in to the Lead-out, which when read by a CD reader are converted into the digital data 0 or 1 (bit.) In CD readers there is a converter which converts said digital data into analog data: said analog data are the music.

This audio CD structuring allows, besides the disc being played back in any of the CD readers in the market, such as home CD readers, discman, car readers, mini-systems and stereo systems as well as in personal computers.

Obviously, any audio CD can be copied with the aid of an audio CDR recorder and also with a personal computer, in such a way that these copies entail great losses to the recording industry.

Although audio CDR recorders are not very extended, and given that most music users own only a CD reader, the use of personal computers is very common, it is by the use of computers that the aforementioned copies are made and upon which an impediment is to be imposed.

### DESCRIPTION OF THE INVENTION

The anti-copy protection system that the invention proposes allows the CD playing back with no problem in any reader of the aforementioned and its playing back or copying into an audio cassette, a audio CDR recorder, a DAT unit, etc., and impedes the playing back, and therefore the partial or complete copying of a CD in a personal computer.

For said purpose, and in a more specific fashion, said system consists in modifying the contents of the Lead-in or TOC, so that when putting the CD in a personal computer reader, the reader cannot read the data contents of the CD; however, said data can be read and recognized by an audio reader.

Specifically, the idea is to modify the information or data of the Lead-in or TOC that tell the computer the distribution of information of each sector so that the computers believe that the data that contain the protected songs have a different distribution from the actual one. By doing it this way, when trying to read one or more protected songs with a personal computer, the reader will jump to those songs which are unprotected (if there are any) in such a way that the protected song will not be prone to be copied or played back.

The protection system is carried out track by track, so that CD's can be protected partially or wholly, in such a way that when a partial protection is made, those songs that are not protected can be read and copied.

### PREFERRED EMBODIMENT OF THE INVENTION

In an audio CD, the songs are distributed in the following fashion:

The Program Area or CD content is divided into minutes and each minute divided into seconds and each second into 75 sectors. Each sector is in turn divided into 3,224 bytes. The way the bytes are distributed depends on the way the CD was recorded, which corresponds to the disc contents and are basically three:
- Audio Mode (Audio CD): the 3,224 bytes per sector are divided in the following fashion: 2,352 bytes for audio data, 392 bytes for the first EDC/ECC, 392 bytes for the second EDC/ECC and 98 bytes for the byte control.
- Mode 1 (CD ROM): the 3,224 bytes per sector are divided in the following fashion: 12 bytes for synchronism, 4 bytes for the Header, 2,048 bytes for the user data, 4 bytes for EDC, 276 for ECC and 882 bytes for the first and second EDC/ECC and byte control.
- Mode 2 (CD ROM): the 3,224 bytes per sector are divided in the following fashion: 12 bytes for synchronism, 4 bytes for the Header, 2,048 bytes for the user data, 4 bytes for EDC, 276 for ECC and 882 bytes for the first and second EDC/ECC and byte control.

By modifying the data in the Lead-in or in the TOC, which control the CD byte distribution with software prepared for this effect, it so happens that when putting a protected CD into the computer, the computer believes the data distribution is in a mode (Mode 1 or Mode 2) which does not correspond to the Mode (Audio Mode) with which the CD was actually recorded. However, when putting said protected CD into an audio reader, the reader will recognize the Mode (Audio Mode) with which the audio CD content was recorded.

Once the Lead-in has been modified, both during pre-mastering and mastering, the CD's can be played back with no problems in audio readers, but if the CD's are being played back in a personal computer only those songs which are not protected, in case at least one of the songs has been left unprotected because it was considered that its copying or duplication does not entail any problems. In a more specific way, when trying to play a protected disc in a personal computer, only those recordings unprotected can be played back, with the computer skipping those that are protected.

## Claims

1. Anti-copy protection system for audio compact discs which is especially conceived for impeding the recording of the contents of said compact discs in a computer, **characterized in that** it consists in modifying the contents of the disc Lead-in or TOC so that the Program Area cannot be played back by the computer reader but it can be played back in an audio reader

2. Anti-copy protection system for audio compact discs according to claim 1, **characterized in that** the modification of the Lead-in or TOC consists in editing the information that indicates the computers the data distribution in each one of the compact disc sectors, so that to the computer readers the data that arrive regarding the distribution of the protected songs are different from the actual distribution, data which do not affect audio readers currently in the market, because they are ROM-featured.

3. Anti-copy protection system for audio compact discs according to previous claims, **characterized in that** the data edited for the computer readers can affect the CD partially or wholly, in order to avoid its complete or partial copying, allowing the playing back and recording of some of its tracks.
